# EUROPEAN PATENT SPECIFICATION

(11) **EP 2 148 424 B1**
(45) Date of publication and mention of the grant of the patent: **23.05.2012**
(21) Application number: 09251843.0
(22) Date of filing: 22.07.2009
(51) Int. Cl.: H02P 5/46, H02P 5/50

(54) **Asynchronus AC induction electrical machines in cross-interlockingly series connection**
Drehstrom-Asynchronmaschinen mit Reihen-Verschaltung über Kreuz
Machines électriques à induction CA asynchrones en connexion en série en interblocage croisé

(30) Priority: 23.07.2008 US 219476; 15.12.2008 US 314628; 27.03.2009 US 382951
(43) Date of publication of application: 27.01.2010
(73) Proprietor: Yang, Tai-Her, Si-Hu Town, Dzan-Hwa (TW)
(72) Inventor: Tai-Her, Yang, Si-Hu Town Dzan-Hwa (TW)
(74) Representative: Wright, Howard Hugh Burnby

(56) References cited:
- GB-A- 405 465
- GB-A- 556 437
- GB-A- 1 354 713

## Description

### BACKGROUND OF THE INVENTION

### (a) Field of the invention

The present invention innovatively discloses that at least two asynchronous AC induction electrical machines (hereinafter referred to as electrical machine) in series connection with the power source are respectively installed with main winding and control winding for electrical machine operation, wherein the two electrical machines being combined by taking the example of cross-interlockingly series connection comprises the following:
-- The first electrical machine control winding and the first electrical machine main winding are windingly installed on the same polar axis or windingly installed at electrical angle between polar axes within the first electrical machine, wherein the two electrical machines are optionally operated in cross-interlockingly series connection according to operating requirements of the polarity relationship between the two to appear 1) additional exciting operation in the same polarities, or 2) differential exciting operation in reverse polarities;
-- The second electrical machine control winding and the second electrical machine main winding are windingly installed on the same polar axis or windingly installed at electrical angle between polar axes within the second electrical machine wherein the two electrical machines are optionally operated in cross-interlockingly series connection according to operating requirements of the polarity relationship between the two to appear 1) additional exciting operation in the same polarities, or 2) differential exciting operation in reverse polarities;
-- The first electrical machine main winding is the main operating winding of the first electrical machine, while the first terminal of the first electrical machine control winding is connected with the second terminal of the second electrical machine main winding installed in the second electrical machine;
-- The second electrical machine main winding is the main operating winding of the second electrical machine, wherein the first terminal of the second electrical machine control winding is connected with the second terminal of the first electrical machine main winding installed in the first electrical machine;
-- The first terminal of the first electrical machine main winding is connected in series with the second terminal of the first electrical machine control winding;
-- The first terminal of the second electrical machine main winding and the second terminal of the second electrical machine control winding are respectively connected in series with the power source for input or output electric power;

The windings of said first electrical machine and second electrical machine are series connected and are driven by the power source, wherein the operation effect of the first electrical machine and the second electrical machine being cross-interlockingly series connected to drive the load individually is led by the changes of individual electrical machine driving loading statuses to appear variable impedance operation so as to change the end voltage ratio between individual electrical machines in cross-interlockingly series connections thereby allowing each individual electrical machine to produce interaction of required electromagnetic effect;

Especially for the application of disposing multiple asynchronous AC induction electrical machines to drive a common load, when the common load varies unstable against the loads imposed by individual asynchronous AC induction electrical machines, such as the embodiment of using individual asynchronous AC induction electrical machines to drive different wheels, the load at the wheels on both sides will vary accordingly when the vehicle is making a turn, or the embodiment of the tram connecting multiple coaches to constitute a common load being disposed individual asynchronous AC induction electrical machines on individual coaches to drive the coaches individually, when the tram is speeding, decelerating or climbing up/down slopes, the common load varies according to the load imposed by individually disposed asynchronous AC induction electrical machines, the real time response and adjustment between individual asynchronous AC induction electrical machines is very important; conventional solution is through the individual detecting device installed on individual asynchronous AC induction electrical machines to deliver the signal of load variations to the central controller, then the drive control device disposed on individual asynchronous AC induction electrical machines is subject to the control of the central controller, so that to control the corresponding operation performance of individual asynchronous AC induction electrical machines; the conventional solution has the drawback of complicated system, lower reliability, and longer response adjustment time period required between individual asynchronous AC induction electrical machines, therefore when applied to the tram connecting multiple coaches to constitute the common load as aforementioned, the individual coaches are prone to generate jostle phenomenon;

The present invention innovatively discloses that the asynchronous AC induction electrical machines in cross-interlockingly series connection is through the windings of multiple asynchronous AC induction electrical machines to crossly interlock and generate random adjustment of the operation performance according to the load variations, thereby having the advantages of simplifying the system, increasing the reliability as well as shortening the response adjustment time period of asynchronous AC induction electrical machines to load variations, so that to promote the stability of the system.

### (b) Description of the Prior Art

When multiple units of conventional asynchronous AC induction electrical machines being series connected for motor or generator function are individually operated to drive the load, the individual electrical machines can only follow the variations of individual load-driven statuses to appear variable impedance operation so as to mutually affect their end voltages but unable to produce interaction of particular electromagnetic effect.

The cross-interlocking connection of the armature and field windings of series wound DC machines is described in documents GB 405465 and GB556437.

### SUMMARY OF THE INVENTION

The present invention, as set forth in claim 1, innovatively discloses that at least two asynchronous AC induction electrical machines (hereinafter referred to as electrical machine) in series connection with the power source are respectively installed with main winding and control winding for electrical machine operation, take example for the two electrical machines in cross-interlockingly series connection, wherein the first electrical machine main winding is the main operating winding of the first electrical machine, while the first electrical machine control winding is series connected with the second electrical machine main winding of the second electrical machine, the first electrical machine control winding and the first electrical machine main winding are windingly installed on the same polar axis or windingly installed at electrical angle between polar axes within the first electrical machine, wherein the two electrical machines are optionally operated in cross-interlockingly series connection according to operating requirements of the polarity relationship between the two to appear 1) additional exciting operation in the same polarities, or 2) differential exciting operation in reverse polarities; the second electrical machine main winding being relatively installed within the second electrical machine is the main operating winding of the first electrical machine, while the second electrical machine control winding is series connected with the first electrical machine main winding of the first electrical machine, the second electrical machine control winding and the second electrical machine main winding are windingly installed on the same polar axis or windingly installed at electrical angle between polar axes within the second electrical machine wherein the two electrical machines are optionally operated in cross-interlockingly series connection according to operating requirements of the polarity relationship between the two to appear 1) additional exciting operation in the same polarities, or 2) differential exciting operation in reverse polarities, wherein the electrical machine in series connection with the power source being individually driven in loading operation causes the cross-interlockingly series connected electrical machine to appear variable impedance operation following variations of individual load-driven statuses of individual electrical machines thereby changing the end voltage ratio between individual electrical machines in cross-interlockingly series connection to let each individual electrical machine produce required interactive reactions by electrical machine effect.

Especially for the application of disposing multiple asynchronous AC induction electrical machines to drive a common load, when the common load varies unstable against the loads imposed by individual asynchronous AC induction electrical machines, such as the embodiment of using individual asynchronous AC induction electrical machines to drive different wheels, the load at the wheels on both sides will vary accordingly when the vehicle is making a turn, or the embodiment of the tram connecting multiple coaches to constitute a common load being disposed individual asynchronous AC induction electrical machines on individual coaches to drive the coaches individually, when the tram is speeding, decelerating or climbing up/down slopes, the common load varies according to the load imposed by individually disposed asynchronous AC induction electrical machines, the real time response and adjustment between individual asynchronous AC induction electrical machines is very important. Conventional solution is through the individual detecting device installed on individual asynchronous AC induction electrical machines to deliver the signal of load variations to the central controller, then the drive control device disposed on individual asynchronous AC induction electrical machines is subject to the control of the central controller, so that to control the corresponding operation performance of individual asynchronous AC induction electrical machines; the conventional solution has the drawback of complicated system, lower reliability, and longer response adjustment time period required between individual asynchronous AC induction electrical machines, therefore when applied to the tram connecting multiple coaches to constitute the common load as aforementioned, the individual coaches are prone to generate jostle phenomenon;

The present invention innovatively discloses that the asynchronous AC induction electrical machines in cross-interlockingly series connection is through the windings of multiple asynchronous AC induction electrical machines to crossly interlock and generate random adjustment of the operation performance according to the load variations, thereby having the advantages of simplifying the system, increasing the reliability as well as shortening the response adjustment time period of asynchronous AC induction electrical machines to load variations so that to promote the stability of the system.

In practical applications, the asynchronous AC induction electrical machines in cross-interlockingly series connection of present invention include the following:
-- The electrical specifications and characteristics of the main windings installed within respective individual asynchronous AC induction electrical machines can be the same or different;
-- The electrical specifications and characteristics of the control windings installed within respective individual asynchronous AC induction electrical machines can be the same or different;
-- The rated specifications and operating characteristics of respective individual asynchronous AC induction electrical machines can be the same or different;
-- The individual electrical machines can be constituted by asynchronous AC induction electrical machines having the same or different structural types and different operating characteristics;

For the asynchronous AC induction electrical machines in cross-interlockingly series connection of present invention, the individual electrical machines being mutually series connected are directly driven by AC electric power source, including AC single phase or multiple phase power sources, or DC to AC power source, wherein the power source can be fixed or modulated by voltage, frequency, or frequency and voltage together for rotational speed, rotating torque, rotational direction, or power regeneration braking operations, or used as the coupling transmission device under asynchronous electromagnetic effect for transmission operation.

### BRIEF DESCRIPTION OF THE DRAWINGS

Fig. 1 is a structural schematic view of asynchronous AC induction electrical machines in cross-interlockingly series connection of the present invention comprising two asynchronous AC induction electrical machines in series connection.
Fig. 2 is a schematic view of the embodiment of the present invention showing that two 3-phase asynchronous AC induction electrical machines being driven by the 3-phase power source are in Y series connection.
Fig. 3 is a schematic view of the embodiment of the present invention showing that two 3-phase asynchronous AC induction electrical machines being driven by the 3-phase 4-wire power source are in 3-phase 4 wire Y series connection.
Fig. 4 is a schematic view of the embodiment of the present invention showing that two 3-phase asynchronous AC induction electrical machines being driven by the 3-phase power source are in Δ series connection
Fig. 5 is a structural schematic view of the asynchronous AC induction electrical machines in cross-interlockingly series connection of the present invention comprising three asynchronous AC induction electrical machines in series connection.

### DESCRIPTION OF MAIN COMPONENT SYMBOLS

100: First electrical machine
101: First electrical machine main winding
102: First electrical machine control winding
200: Second electrical machine
201: Second electrical machine main winding
202: Second electrical machine control winding
300: Third electrical machine
301: Third electrical machine main winding
302: Third electrical machine control winding
1000: Power source
3100: First 3-phase electrical machine
3101: First 3-phase electrical machine main winding
3102: First 3-phase electrical machine control winding
3200: Second 3-phase electrical machine
3201: Second 3-phase electrical machine main winding
3202: Second 3-phase electrical machine control winding

### DETAILED DESCRIPTION OF THE PREFERRED EMBODIMENTS

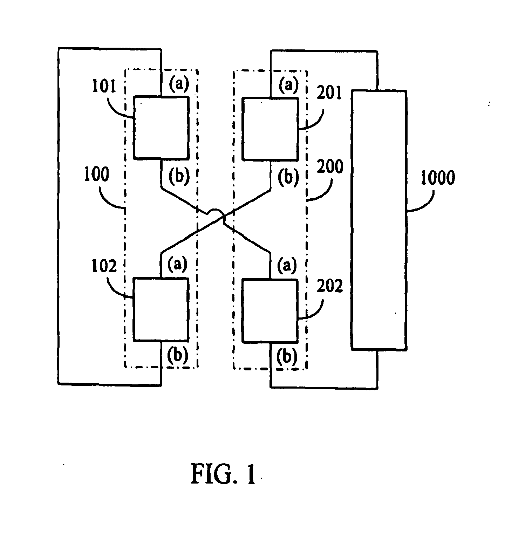

The principle of the present invention is delineated in the following: Fig. 1 is a structural schematic view of asynchronous AC induction electrical machines in cross-interlockingly series connection of the present invention comprising two asynchronous AC induction electrical machines in series connection.

As shown in Fig. 1, the cross-interlocked series connected circuit is driven by power source (1000) which includes AC single phase or multiple phase power sources, or DC to AC power source; the power source can be fixed or modulated by voltage, frequency, or frequency and voltage together.

The present invention innovatively discloses that at least two asynchronous AC induction electrical machines (hereinafter referred to as electrical machine) in series connection with the power source are respectively installed with main winding and control winding for electrical machine operation, wherein the two electrical machines in cross-interlockingly series connection is taken as the example to constitute the following:
The first electrical machine main winding (101) is the main operating winding of the first electrical machine (100), while terminal (a) of the first electrical machine control winding (102) is series connected with terminal (b) of the second electrical machine main winding (201) of the second electrical machine (200), the first electrical machine control winding (102) and the first electrical machine main winding (101) are windingly installed on the same polar axis or windingly installed at electrical angle between polar axes within the first electrical machine (100), wherein the two electrical machines (100, 200) are optionally operated in cross-interlockingly series connection according to operating requirements of the polarity relationship between the two to appear 1) additional exciting operation in the same polarities, or 2) differential exciting operation in reverse polarities;
The second electrical machine main winding (201) being installed within the second electrical machine (200) is the main operating winding of the second electrical machine (200), while terminal (a) of the second electrical machine control winding (202) is series connected with terminal (b) of the first electrical machine main winding (101) of the first electrical machine (100), the second electrical machine control winding (202) and the second electrical machine main winding (101) are windingly installed on the same polar axis or windingly installed at electrical angle between polar axes within the second electrical machine (200) wherein the two electrical machines are optionally operated in cross-interlockingly series connection according to operating requirements of the polarity relationship between the two to appear 1) additional exciting operation in the same polarities, or 2) differential exciting operation in reverse polarities;
The terminal (a) of second electrical machine main winding (201) and terminal (b) of second electrical machine control winding (202) of the second electrical machine (200) are connected to the power source (1000); the terminal (a) of the first electrical machine main winding (101) of the first electrical machine (100) is connected with terminal (b) of the first electrical machine control winding (102), wherein the two electrical machines (100, 200) are firstly series connected before connected to the power source, and the cross-interlockingly series connected two electrical machines (100, 200) during the operation of individually driven loadings appear variable impedance operation following variations of individual load-driven statuses of individual electrical machines thereby changing the end voltage ratio between individual electrical machines in cross-interlockingly series connection to let each relatively mutually interlockingly series connected individual electrical machine produce the required interactive reactions by electrical machine effect.

In electricity discharge operation, if the current is changed due to loading variation of the first electrical machine (100), then exciting current of the second electrical machine control winding (202) of the second electrical machine (200) being series connected with the first electrical machine main winding (101) is simultaneously varied, so that the synthetic magnetic flux between the second electrical machine main winding (201) and the second electrical machine control winding (202) is varied according to polarity relationship, positional relationship of polar axis electrical angle, and phase relationship of exciting current between the two thereby allowing the torque and rotational speed of the second electrical machine (200) to be adjusted following the changes of its own end voltage and loading as well as the changes of operating current at the first electrical machine main winding (101) of the first electrical machine (100) being series connected with the second electrical machine control winding (202) simultaneously; on the contrary, if the current is changed due to loading variation of the second electrical machine (200), then exciting current of the first electrical machine control winding (102) of the first electrical machine (100) being series connected with the second electrical machine main winding (201) is simultaneously varied, so that the synthetic magnetic flux between the first electrical machine main winding (101) and the first electrical machine control winding (102) is varied according to polarity relationship, positional relationship of polar axis electrical angle, and phase relationship of exciting current between the two thereby allowing the torque and rotational speed of the first electrical machine (100) to be adjusted following changes of its own end voltage and loading and changes of operating current at the second electrical machine main winding (201) of the second electrical machine (200) being serics connected with the first electrical machine control winding (102) simultaneously

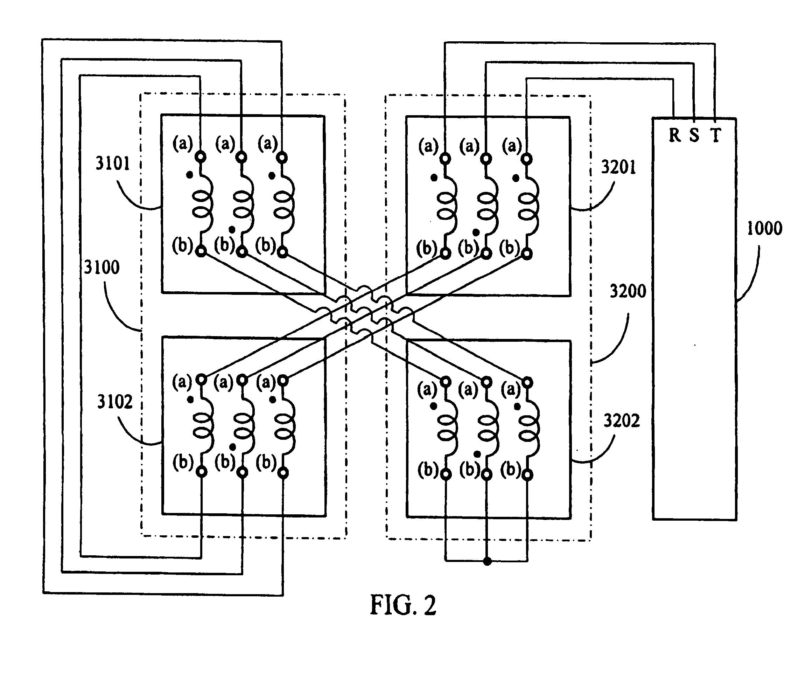

Fig. 2 is a schematic view of the embodiment of the present invention showing that two 3-phase asynchronous AC induction electrical machines being driven by the 3-phase power source are in y series connection

Wherein:
-- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The first 3-phase electrical machine main winding (3101) is the main operating winding of the first 3-phase electrical machine (3100), wherein terminal (a) of each phase winding of the first 3-phase electrical machine control winding (3102) is connected with terminal (b) of each phase winding of the second 3-phase electrical machine main winding (3201) being installed within the second 3-phase electrical machine (3200);
-- The second 3-phase electrical machine main winding (3201) is the main operating winding of the second 3-phase electrical machine (3200), wherein terminal (a) of each phase winding of the second 3-phase electrical machine control winding (3202) is connected with terminal (b) of each phase winding of the first 3-phase electrical machine main winding (3101) being installed within the first 3-phase electrical machine (3100);
-- The terminal (a) of each phase winding of the first 3-phase electrical machine main winding (3101) is connected with terminal (b) of each phase winding of the first 3-phase electrical machine control winding (3102);
-- The terminal (a) of each phase winding of the second 3-phase electrical machine main winding (3201) is connected to terminals R.S.T. of the 3-phase power source, the terminal (b) of each phase winding of the second 3-phase electrical machine control winding (3202) is in Y connection;

Said first 3-phase electrical machine (3100) and said second 3-phrase electrical machine (3200) are driven by the AC 3-phase power source (1000), wherein the first 3-phase electrical machine (3100) and the second 3-phase electrical machine (3200) in the operation of individually driven loadings are by the effect of cross-interlockingly series connected operation to appear variable impedance operation according to the changes of individual electrical machine driving loading statuses so as to change the end voltage ratio between individual electrical machines in cross-interlockingly series connections thereby allowing each individual electrical machine to produce interaction of required electromagnetic effect.

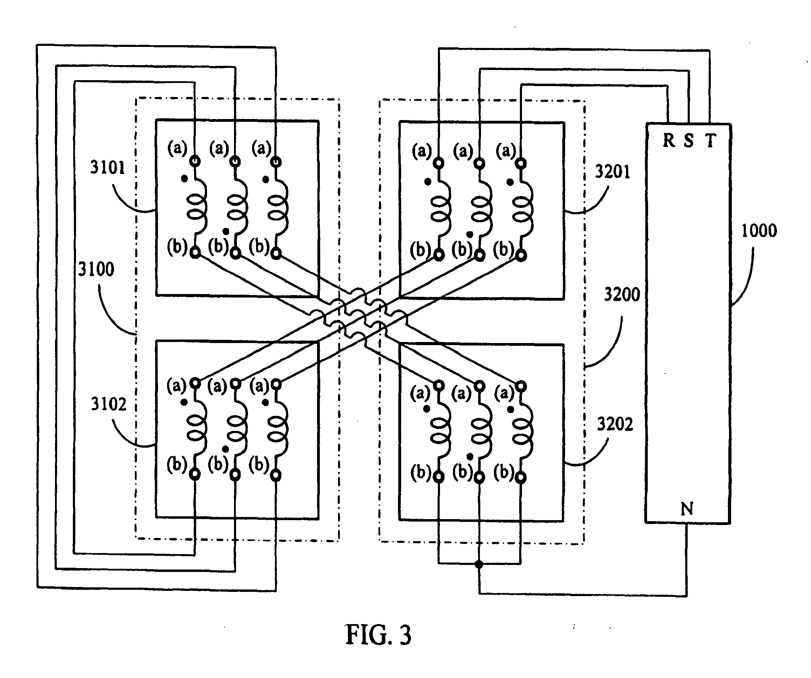

Fig. 3 is a schematic view of the embodiment of the present invention showing that two 3-phrase asynchronous AC induction electrical machines being driven by the 3-phase 4-wire power source are in 3-phase 4-wire Y series connection.

wherein:
-- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The first 3-phase electrical machine main winding (3101) is the main operating winding of the first 3-phase electrical machine (3100), wherein terminal (a) of each phase winding of the first 3-phase electrical machine control winding (3102) is connected with terminal (b) of each phase winding of the second 3-phase electrical machine main winding (3201) being installed within the second 3-phase electrical machine (3200);
-- The second 3-phase electrical machine main winding (3201) is the main operating winding of the second 3-phase electrical machine (3200), wherein terminal (a) of each phase winding of the seconde 3-phase electrical machine control winding (3202) is connected with terminal (b) of each phase winding of the first 3-phase electrical machine main winding (3101) being installed within the first 3-phase electrical machine (3100);
-- The terminal (a) of each phase winding of the first 3-phase electrical machine main winding (3101) is connected with terminal (b) of each phase winding of the first 3-phase electrical machine control winding (3102);
-- The terminal (a) of each phase winding of second 3-phase electrical machine main winding (3201) is connected to terminals R.S.T. of the AC 3-phase 4-wire power source; terminal (b) of each phase winding of second 3-phase electrical machine control winding (3202) being in Y connection is connected to the neutral terminal N of the AC 3-phase 4-wire power source;

Said first 3-phase electrical machine (3100) and said second 3-phase electrical machine (3200) are driven by the AC 3-phase 4-wire power source (1000), wherein the first 3-phase electrical machine (3100) and the second 3-phase electrical machine (3200) in the operation of individually driven loadings are by the effect of cross-interlockingly series connected operation to appear variable impedance operation according to the changes of individual electrical machine driving loading statuses so as to change the end voltage ratio between individual electrical machines in cross-interlockingly series connections thereby allowing each individual electrical machine to produce interaction of required electromagnetic effect.

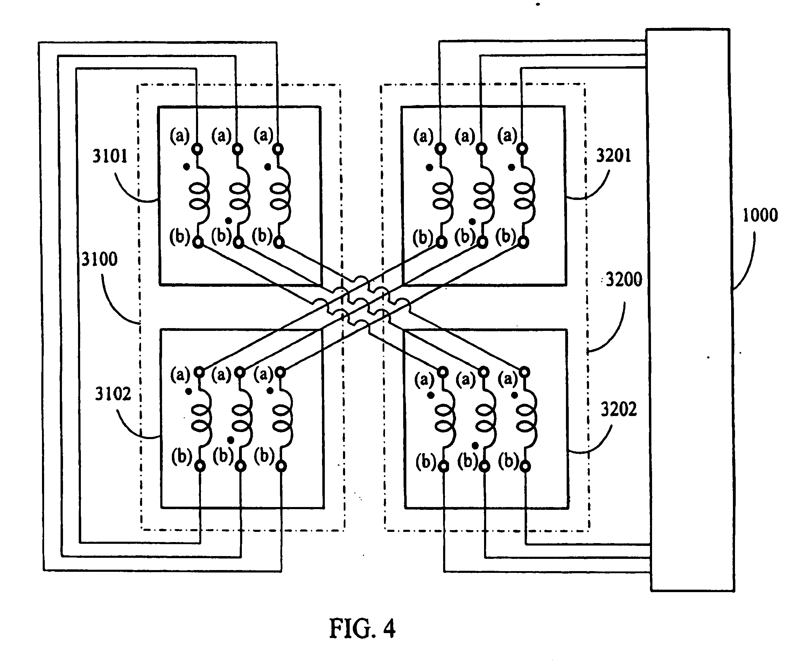

Fig. 4 is a schematic view of the embodiment of the present invention showing that two 3-phase asynchronous AC induction electrical machines being driven by the AC 3-phase power source are in A series connection.

wherein:
-- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The first 3-phase electrical machine main winding (3101) is the main operating winding of the first 3-phase electrical machine (3100), wherein terminal (a) of each phase winding of the first 3-phase electrical machine control winding (3102) is connected with terminal (b) of each phase winding of the second 3-phase electrical machine main winding (3201) being installed within the second 3-phase electrical machine (3200);
-- The second 3-phase electrical machine main winding (3201) is the main operating winding of the second 3-phase electrical machine (3200), wherein terminal (a) of each phase winding of the second 3-phase electrical machine control winding (3202) is connected with terminal (b) of each phase winding of the first 3-phase electrical machine main winding (3101) being installed within the first 3-phase electrical machine (3100);
-- The terminal (a) of each phase winding of the first 3-phase electrical machine main winding (3101) is connected with terminal (b) of each phase winding of the first 3-phase electrical machine control winding (3102);
-- The terminal (a) of each phase winding of the second 3-phase electrical machine main winding (3201) and terminal (b) of each phase winding of the second 3-phase electrical machine control winding (3202) are in A connection and further connected to terminals R.S.T. of the AC 3-phase power source (1000);

Said first 3-phase electrical machine (3100) and said second 3-phase electrical machine (3200) are driven by the AC 3-phase power source (1000), wherein the first 3-phase electrical machine (3100) and the second 3-phase electrical machine (3200) in the operation of individually driven loadings are by the effect of cross-interlockingly series connected operation to appear variable impedance operation according to the changes of individual electrical machine driving loading statuses so as to change the end voltage ratio between individual electrical machines in cross-interlockingly series connections thereby allowing each individual electrical machine to produce interaction of required electromagnetic effect.

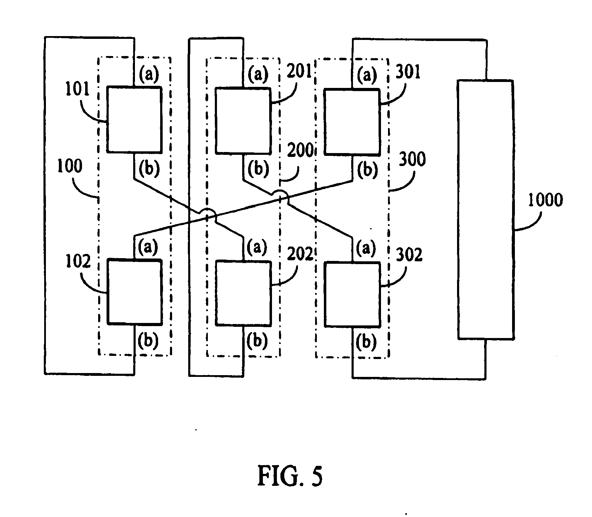

The aforesaid principles can also be applied to multiple electrical machines, such as that Fig. 5 is a structural schematic view of the asynchronous AC induction electrical machines in cross-interlockingly series connection of the present invention comprising three asynchronous AC induction electrical machines in series connection; as shown in Fig. 5:
The magnetic field of the first electrical machine (100) is windingly installed with the first electrical machine main winding (101) and windingly installed with the first electrical machine control winding (102) on the same polar axis or at electrical angle between polar axes, wherein terminal (a) of the first electrical machine control winding (102) is series connected with terminal (b) of the third electrical machine main winding (301) being windingly installed within the third electrical machine (300); the magnetic field of the second electrical machine (200) is windingly installed with the second electrical machine main winding (201) and windingly installed with the second electrical machine control winding (202) on the same polar axis or at electrical angle between polar axes, wherein terminal (a) of the second electrical machine control winding (202) is series connected with terminal (b) of the first electrical machine main winding (101) being windingly installed within the first electrical machine (100); the magnetic field of the third electrical machine (300) is windingly installed with the third electrical machine main winding (301) and windingty installed with the third electrical machine control winding (302) on the same polar axis or at electrical angle between polar axes, wherein terminal (a) of the third electrical machine control winding (302) is series connected with terminal (b) of the second electrical machine main winding (201) being windingly installed within the second electrical machine (200);
The terminal (a) of the third electrical machine main winding (301) of the third electrical machine (300) and terminal (b) of the third electrical machine control winding (302) are connected to the power source (1000); terminal (a) of the first electrical machine main winding (101) of the first electrical machine (100) is connected with terminal (b) of the first electrical machine control winding (102), it is through the combining status of the particular series connections between main windings and control windings of aforesaid three electrical machines being individually powered by the power source (1000) to drive loads and following variations of individual load-driven statuses of individual electrical machines to appear variable impedance operation, and the end voltage ratios between individual electrical machines in cross-interlockingly series connection are hence further changed to allow individual electrical machines to produce required interactive reactions by the electrical machine effect.

For the asynchronous AC induction electrical machines in cross-interlockingly series connection of present invention, if the number of constituting electrical machines is increased, the aforesaid principles and theories can be similarly deducted.

For the asynchronous AC induction electrical machines in cross-interlockingly series connection of present invention, the defined asynchronous AC electrical machine is constituted by rotating magnetic field and the asynchronously actuated interactive body induced by electromagnetic effect.

In practical application, the asynchronous AC induction electrical machines in cross-interlockingly series connection of present invention can be constituted by multiple units of one type or mixed types of squirrel cage type electrical machines or eddy current induction type asynchronous AC electrical machines to include the following combinations according to functional requirements: it is applied 1) for asynchronous AC induction squirrel cage type motor functional operations; or 2) for asynchronous eddy current induction motor functional operations; or 3) for asynchronous AC induction squirrel cage type generator functional operations; or 4) for asynchronous eddy current induction generator functional operations; or 5) for partial generator functional operation and partial motor functional operation; or 6) as the induction squirrel cage type electrical machine braking device; or 7) as the eddy current induction type electrical machine braking device; or 8) as the asynchronous induction squirrel type electromagnetic coupling transmission device; or 9) as the asynchronous eddy current induction type electromagnetic coupling transmission device.

For the asynchronous AC induction electrical machines in cross-interlockingly series connection of present invention, the excitation relationships between the main winding and the control winding in the electrical machine itself include the following:
(1) The main windings and control windings within all electrical machines themselves are installed in the same polarities; or
(2) The main windings and control windings within all electrical machines themselves are installed in reverse polarities; or
(3) The main windings and control windings within partial electrical machines themselves are installed in the same polarities, while the main windings and control windings within partial electrical machines themselves are installed in reverse polarities.

For the asynchronous AC induction electrical machines in cross-interlockingly series connection of present invention, the main winding and control winding within the individual electrical machine are installed on the same polarities or installed at electrical angle difference, wherein the method of installation at electrical angle difference is through control winding passing current to change distribution shape of the magnetic field constituted together with the main magnetic field.

For the asynchronous AC induction electrical machines in cross-interlockingly series connection of present invention, the individual electrical machines are mutually series connected and are directly driven by AC electric power source, including AC single phase or multi-phase power source, or DC to AC power source; wherein the power source is fixedly or voltage modulated, or is commonly modulated by frequency or voltage, or modulated by frequency and voltage simultaneously for rotational speed, rotating torque, rotational direction, or power regeneration braking operations, or used as the coupling transmission device under asynchronous electromagnetic effect for transmission operation.

## Claims

1. At least two asynchronous AC induction electrical machines (100, 200) in cross-interlockingly series connection, hereinafter referred to as electrical machines and, in series connection with a power source (1000) are respectively installed with main winding and control winding for electrical machine operation, the electrical machines comprising the following:
-- The first electrical machine control winding (102) and the first electrical machine main winding (101) are windingly installed on the same polar axis or windingly installed at electrical angle between polar axes within the first electrical machine (100), wherein the two electrical machines are optionally operated in cross-interlockingly series connection according to operating requirements of the polarity relationship between the two to appear 1) additional exciting operation in the same polarities, or 2) differential exciting operation in reverse polarities;
-- The second electrical machine control winding (202) and the second electrical machine main winding (201) are windingly installed on the same polar axis or windingly installed at electrical angle between polar axes within the second electrical machine (200) wherein the two electrical machines are optionally operated in cross-interlockingly series connection according to operating requirements of the polarity relationship between the two to appear 1) additional exciting operation in the same polarities, or 2) differential exciting operation in reverse polarities;
-- The first electrical machine main winding (101) is the main operating winding of the first electrical machine (100), while the first terminal (a) of the first electrical machine control winding (102) is connected with the second terminal (b) of the second electrical machine main winding (201) installed in the second electrical machine (200);
-- The second electrical machine main winding (201) is the main operating winding of the second electrical machine (200), wherein the first terminal (a) of the second electrical machine control winding (202) is connected with the second terminal (b) of the first electrical machine main winding (101) installed in the first electrical machine (100);
-- The first terminal (a) of the first electrical machine main winding (101) is connected in series with the second terminal (b) of the first electrical machine control winding (102);
-- The first terminal (a) of the second electrical machine main winding (201) and the second terminal (b) of the second electrical machine control winding (202) are respectively connected in series with the power source (1000) for input or output electric power;
The windings of said first electrical machine (100) and second electrical machine (200) are series connected and are driven by the power source (1000), wherein the operation effect of the first electrical machine (100) and the second electrical machine (200) being cross-interlockingly series connected to drive the load individually is led by the changes of individual electrical machine driving loading statuses to appear variable impedance operation so as to change the end voltage ratio between individual electrical machines in cross-interlockingly series connections thereby allowing each individual electrical machine to produce interaction of required electromagnetic effect.

2. The asynchronous AC induction electrical machines in cross-interlockingly series connection as claimed in claim 1, wherein the electrical specifications and characteristics of the main windings installed within respective individual asynchronous AC induction electrical machines can be the same or different.

3. The asynchronous AC induction electrical machines in cross-interlockingly series connection as claimed in claim 1, wherein the electrical specifications and characteristics of the control windings installed within respective individual asynchronous AC induction electrical machines can be the same or different.

4. The asynchronous AC induction electrical machines in cross-interlockingly series connection as claimed in claim 1, wherein the rated specifications and operating characteristics of respective individual asynchronous AC induction electrical machines can be the same or different.

5. The asynchronous AC induction electrical machines in cross-interlockingly series connection as claimed in claim 1, wherein the individual electrical machines can be constituted by asynchronous AC induction electrical machines having the same or different structural types and different operating characteristics.

6. The asynchronous AC induction electrical machines in cross-interlockingly series connection as claimed in claim 1, wherein it is driven by AC electric power source, including AC single phase or multiple phase power sources, or DC to AC power source, wherein the power source can be fixed or modulated by voltage, frequency, or frequency and voltage together for rotational speed, rotating torque, rotational direction, or power regeneration braking operations, or used as the coupling transmission device under asynchronous electromagnetic effect for transmission operation.

7. The asynchronous AC induction electrical machines in cross-interlockingly series connection as claimed in claim 1, wherein it includes adopting two electrical machines in cross-interlockingly series connection to constitute the following:
The first electrical machine main winding (101) is the main operating winding of the first electrical machine (100), while terminal (a) of the first electrical machine control winding (102) is series connected with terminal (b) of the second electrical machine main winding (201) of the second electrical machine (200), the first electrical machine control winding (102) and the first electrical machine main winding (101) are windingly installed on the same polar axis or windingly installed at electrical angle between polar axes within the first electrical machine (100), wherein the two electrical machines (100, 200) are optionally operated in cross-interlockingly series connection according to operating requirements of the polarity relationship between the two to appear 1) additional exciting operation in the same polarities, or 2) differential exciting operation in reverse polarities;
The second electrical machine main winding (201) being installed within the second electrical machine (200) is the main operating winding of the second electrical machine (200), while terminal (a) of the second electrical machine control winding (202) is series connected with terminal (b) of the first electrical machine main winding (101) of the first electrical machine (100), the second electrical machine control winding (202) and the second electrical machine main winding (101) are windingly installed on the same polar axis or windingly installed at electrical angle between polar axes within the second electrical machine (200) wherein the two electrical machines are optionally operated in cross-interlockingly series connection according to operating requirements of the polarity relationship between the two to appear 1) additional exciting operation in the same polarities, or 2) differential exciting operation in reverse polarities;
The terminal (a) of second electrical machine main winding (201) and terminal (b) of second electrical machine control winding (202) of the second electrical machine (200) are connected to the power source (1000); the terminal (a) of the first electrical machine main winding (101) of the first electrical machine (100) is connected with terminal (b) of the first electrical machine control winding (102), wherein the two electrical machines (100, 200) are firstly series connected before connected to the power source, and the cross-interlockingly series connected two electrical machines (100, 200) during the operation of individually driven loadings appear variable impedance operation following variations of individual load-driven statuses of individual electrical machines thereby changing the end voltage ratio between individual electrical machines in cross-interlockingly series connection to let each relatively mutually interlockingly series connected individual electrical machine produce the required interactive reactions by electrical machine effect;
In electricity discharge operation, if the current is changed due to loading variation of the first electrical machine (100), then exciting current of the second electrical machine control winding (202) of the second electrical machine (200) being series connected with the first electrical machine main winding (101) is simultaneously varied, so that the synthetic magnetic flux between the second electrical machine main winding (201) and the second electrical machine control winding (202) is varied according to polarity relationship, positional relationship of polar axis electrical angle, and phase relationship of exciting current between the two thereby allowing the torque and rotational speed of the second electrical machine (200) to be adjusted following the changes of its own end voltage and loading as well as the changes of operating current at the first electrical machine main winding (101) of the first electrical machine (100) being series connected with the second electrical machine control winding (202) simultaneously; on the contrary, if the current is changed due to loading variation of the second electrical machine (200), then exciting current of the first electrical machine control winding (102) of the first electrical machine (100) being series connected with the second electrical machine main winding (201) is simultaneously varied, so that the synthetic magnetic flux between the first electrical machine main winding (101) and the first electrical machine control winding (102) is varied according to polarity relationship, positional relationship of polar axis electrical angle, and phase relationship of exciting current between the two thereby allowing the torque and rotational speed of the first electrical machine (100) to be adjusted following changes of its own end voltage and loading and changes of operating current at the second electrical machine main winding (201) of the second electrical machine (200) being series connected with the first electrical machine control winding (102) simultaneously.

8. The asynchronous AC induction electrical machines in cross-interlockingly series connection as claimed in claim 1, wherein it includes adopting two 3-phase asynchronous AC induction electrical machines in Y series connection to be driven by 3-phase power source, wherein:
- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The first 3-phase electrical machine main winding (3101) is the main operating winding of the first 3-phase electrical machine (3100), wherein terminal (a) of each phase winding of the first 3-phase electrical machine control winding (3102) is connected with terminal (b) of each phase winding of the second 3-phase electrical machine main winding (3201) being installed within the second 3-phase electrical machine (3200);
- The second 3-phase electrical machine main winding (3201) is the main operating winding of the second 3-phase electrical machine (3200), wherein terminal (a) of each phase winding of the second 3-phase electrical machine control winding (3202) is connected with terminal (b) of each phase winding of the first 3-phase electrical machine main winding (3101) being installed within the first 3-phase electrical machine (3100);
- the terminal (a) of each phase winding of the first 3-phase electrical machine main winding (3101) is connected with terminal (b) of each phase winding of the first 3-phase electrical machine control winding (3102);
- The terminal (a) of each phase winding of the second 3-phase electrical machine main winding (3201) is connected to terminals R.S.T. of the 3-phase power source, the terminal (b) of each phase winding of the second 3-phase electrical machine control winding (3202) is in Y connection;
Said first 3-phase electrical machine (3100) and said second 3-phase electrical machine (3200) are driven by the AC 3-phase power source (1000), wherein the first 3-phase electrical machine (3100) and the second 3-phase electrical machine (3200) in the operation of individually driven loadings are by the effect of cross-interlockingly series connected operation to appear variable impedance operation according to the changes of individual electrical machine driving loading statuses so as to change the end voltage ratio between individual electrical machines in cross-interlockingly series connections thereby allowing each individual electrical machine to produce interaction of required electromagnetic effect.

9. The asynchronous AC induction electrical machines in cross-interlockingly series connection as claimed in claim 1, wherein it includes adopting two 3-phase asynchronous AC induction electrical machines in 3-phase 4-wire Y series connection to be driven by the 3-phase 4-wire power source, wherein:
- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The first 3-phase electrical machine main winding (3101) is the main operating winding of the first 3-phase electrical machine (3100), wherein terminal (a) of each phase winding of the first 3-phase electrical machine control winding (3102) is connected with terminal (b) of each phase winding of the second 3-phase electrical machine main winding (3201) being installed within the second 3-phase electrical machine (3200);
-- The second 3-phase electrical machine main winding (3201) is the main operating winding of the second 3-phase electrical machine (3200), wherein terminal (a) of each phase winding of the second 3-phase electrical machine control winding (3202) is connected with terminal (b) of each phase winding of the first 3-phase electrical machine main winding (3101) being installed within the first 3-phase electrical machine (3100);
-- The terminal (a) of each phase winding of the first 3-phase electrical machine main winding (3101) is connected with terminal (b) of each phase winding of the first 3-phase electrical machine control winding (3102);
- The terminal (a) of each phase winding of second 3-phase electrical machine main winding (3201) is connected to terminals R.S.T. of the AC 3-phase 4-wire power source; terminal (b) of each phase winding of second 3-phase electrical machine control winding (3202) being in Y connection is connected to the neutral terminal N of the AC 3-phase 4-wire power source;
Said first 3-phase electrical machine (3100) and said second 3-phase electrical machine (3200) are driven by the AC 3-phase 4-wire power source (1000), wherein the first 3-phase electrical machine (3100) and the second 3-phase electrical machine (3200) in the operation of individually driven loadings are by the effect of cross-interlockingly series connected operation to appear variable impedance operation according to the changes of individual electrical machine driving loading statuses so as to change the end voltage ratio between individual electrical machines in cross-interlockingly series connections thereby allowing each individual electrical machine to produce interaction of required electromagnetic effect.

10. The asynchronous AC induction electrical machines in cross-interlockingly series connection as claimed in claim 1, wherein it includes adopting two 3-phase asynchronous AC induction electrical machines in Δ series connection to be driven by the AC 3-phase power source, wherein:
-- The first 3-phase electrical machine control winding (3102) and the first 3-phase electrical machine main winding (3101) are windingly installed on the same polar axis or windingly installed at electrical angle between polar axes within the first 3-phase electrical machine (3100), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The second 3-phase electrical machine control winding (3202) and the second 3-phase electrical machine main winding (3201) are windingly installed on the same polar axis or windingly installed at electrical angle between polar axes within the second 3-phase electrical machine (3200), wherein the two electrical machines (3100, 3200) are optionally operated in cross-interlockingly series connection according to operating requirements of the polarity relationship between the two to appear 1) additional exciting operation in the same polarities, or 2) differential exciting operation in reverse polarities;
-- The first 3-phase electrical machine main winding (3101) is the main operating winding of the first 3-phase electrical machine (3100), wherein terminal (a) of each phase winding of the first 3-phase electrical machine control winding (3102) is connected with terminal (b) of each phase winding of the second 3-phase electrical machine main winding (3201) being installed within the second 3-phase electrical machine (3200);
-- The second 3-phase electrical machine main winding (3201) is the main operating winding of the second 3-phase electrical machine (3200), wherein terminal (a) of each phase winding of the second 3-phase electrical machine control winding (3202) is connected with terminal (b) of each phase winding of the first 3-phase electrical machine main winding (3101) being installed within the first 3-phase electrical machine (3 100);
-- The terminal (a) of each phase winding of the first 3-phase electrical machine main winding (3101) is connected with terminal (b) of each phase winding of the first 3-phase electrical machine control winding (3102);
-- The terminal (a) of each phase winding of the second 3-phase electrical machine main winding (3201) and terminal (b) of each phase winding of the second 3-phase electrical machine control winding (3202) are in Δ connection and further connected to terminals R.S.T. of the AC 3-phase power source (1000);
Said first 3-phase electrical machine (3100) and said second 3-phase electrical machine (3200) are driven by the AC 3-phase power source (1000), wherein the first 3-phase electrical machine (3100) and the second 3-phase electrical machine (3200) in the operation of individually driven loadings are by the effect of cross-interlockingly series connected operation to appear variable impedance operation according to the changes of individual electrical machine driving loading statuses so as to change the end voltage ratio between individual electrical machines in cross-interlockingly series connections thereby allowing each individual electrical machine to produce interaction of required electromagnetic effect.

11. The asynchronous AC induction electrical machines in cross-interlockingly series connection as claimed in claim 1, wherein it includes adopting three asynchronous AC induction electrical machines in series connection, wherein:
The magnetic field of the first electrical machine (100) is windingly installed with the first electrical machine main winding (101) and windingly installed with the first electrical machine control winding (102) on the same polar axis or at electrical angle between polar axes, wherein terminal (a) of the first electrical machine control winding (102) is series connected with terminal (b) of the third electrical machine main winding (301) being windingly installed within the third electrical machine (300); the magnetic field of the second electrical machine (200) is windingly installed with the second electrical machine main winding (201) and windingly installed with the second electrical machine control winding (202) on the same polar axis or at electrical angle between polar axes, wherein terminal (a) of the second electrical machine control winding (202) is series connected with terminal (b) of the first electrical machine main winding (101) being windingly installed within the first electrical machine (100); the magnetic field of the third electrical machine (300) is windingly installed with the third electrical machine main winding (301) and windingly installed with the third electrical machine control winding (302) on the same polar axis or at electrical angle between polar axes, wherein terminal (a) of the third electrical machine control winding (302) is series connected with terminal (b) of the second electrical machine main winding (201) being windingly installed within the second electrical machine (200);
The terminal (a) of the third electrical machine main winding (301) of the third electrical machine (300) and terminal (b) of the third electrical machine control winding (302) are connected to the power source (1000); terminal (a) of the first electrical machine main winding (101) of the first electrical machine (100) is connected with terminal (b) of the first electrical machine control winding (102), it is through the combining status of the particular series connections between main windings and control windings of aforesaid three electrical machines being individually powered by the power source (1000) to drive loads and following variations of individual load-driven statuses of individual electrical machines to appear variable impedance operation, and the end voltage ratios between individual electrical machines in cross-interlockingly series connection are hence further changed to allow individual electrical machines to produce required interactive reactions by the electrical machine effect;
For the asynchronous AC induction electrical machines in cross-interlockingly series connection of present invention, if the number of constituting electrical machines is increased, the aforesaid principles and theories can be similarly deducted.

12. The asynchronous AC induction electrical machines in cross-interlockingly series connection as claimed in claim 1, wherein the defined asynchronous AC electrical machine is constituted by rotating magnetic field and the asynchronously actuated interactive body induced by electromagnetic effect.

13. The asynchronous AC induction electrical machines in cross-interlockingly series connection as claimed in claim 1, wherein it includes to be applied 1) for asynchronous AC induction squirrel cage type motor functional operations; or 2) for asynchronous eddy current induction motor functional operations; or 3) for asynchronous AC induction squirrel cage type generator functional operations; or 4) for asynchronous eddy current induction generator functional operations; or 5) for partial generator functional operation and partial motor functional operation; or 6) as the induction squirrel cage type electrical machine braking device; or 7) as the eddy current induction type electrical machine braking device; or 8) as the asynchronous induction squirrel type electromagnetic coupling transmission device; or 9) as the asynchronous eddy current induction type electromagnetic coupling transmission device.

14. The asynchronous AC induction electrical machines in cross-interlockingly series connection as claimed in claim 1, wherein the excitation relationships between the main winding and the control winding in the electrical machine itself include the following:
1) The main windings and control windings within all electrical machines themselves are installed in the same polarities; or
2) The main windings and control windings within all electrical machines themselves are installed in reverse polarities; or
3) The main windings and control windings within partial electrical machines themselves are installed in the same polarities, while the main windings and control windings within partial electrical machines themselves are installed in reverse polarities.

15. The asynchronous AC induction electrical machines in cross-interlockingly series connection as claimed in claim 1, wherein the main winding and control winding within the individual electrical machine are installed on the same polarities or installed at electrical angle difference, wherein the method of installation at electrical angle difference is through control winding passing current to change distribution shape of the magnetic field constituted together with the main magnetic field.

16. The asynchronous AC induction electrical machines in cross-interlockingly series connection as claimed in claim 1, wherein the individual electrical machines are mutually series connected and are directly driven by AC electric power source, including AC single phase or multi-phase power source, or DC to AC power source; wherein the power source is fixedly or voltage modulated, or is commonly modulated by frequency or voltage, or modulated by frequency and voltage simultaneously for rotational speed, rotating torque, rotational direction, or power regeneration braking operations, or used as the coupling transmission device under asynchronous electromagnetic effect for transmission operation.

## Patentansprüche

1. Mindestens zwei Asynchron-Induktions-WS-Maschinen (100, 200) - im Folgenden als "elektrische Maschinen" bezeichnet - in über Kreuz verriegelter Reihenschaltung mit einer Stromquelle (1000) sind jeweils mit der Hauptwicklung und der Steuerwicklung für den elektrischen Maschinenbetrieb installiert, wobei die elektrischen Maschinen Folgendes aufweisen:
- die Steuerwicklung und die Hauptwicklung (102 bzw. 101) der ersten elektrischen Maschine (100) sind in dieser auf der gleichen Polachse oder mit einem elektrischen Winkel zwischen Polachsen gewickelt, wobei die beiden elektrischen Maschinen optional in über Kreuz verriegelter Reihenschaltung nach den Anforderungen der Polungsbeziehung zwischen beiden betrieben werden, um 1) mit gleicher Polung zusatzerregt oder 2) mit umgekehrter Polung differenzerregt zu erscheinen;
- die Steuerwicklung und die Hauptwicklung (202 bzw. 201) der zweiten elektrischen Maschine (102) sind in der zweiten elektrischen Maschine (200) auf der gleichen Polachse oder mit einem elektrischen Winkel zwischen den Polachsen gewickelt, wobei die beiden elektrischen Maschinen optional in über Kreuz verriegelter Reihenschaltung nach den Arbeitsanforderungen der Polungsbeziehung zwischen beiden betrieben werden, um 1) mit gleicher Polung zusatzerregt oder 2) mit umgekehrter Polung differenzerregt zu erscheinen;
- die Hauptwicklung (101) der ersten elektrischen Maschine ist die Haupt-Arbeitswicklung der ersten elektrischen Maschine (100), während der erste Anschluss (a) der Steuerwicklung (102) der ersten elektrischen Maschine mit dem zweiten Anschluss (b) der Hauptwicklung (201) in der zweiten elektrischen Maschine (200) verbunden ist;
- die Hauptwicklung (201) der zweiten elektrischen Maschine ist die Haupt-Arbeitswicklung der zweiten elektrischen Maschine (200), während der erste Anschluss (a) der Steuerwicklung (202) der zweiten elektrischen Maschine mit dem zweiten Anschluss (b) der Hauptwicklung (101) in der ersten elektrischen Maschine (100) verbunden ist;
- der erste Anschluss (a) der Hauptwicklung (101) der ersten elektrischen Maschine ist in Reihe mit dem zweiten Anschluss (b) der Steuerwicklung (102) in der ersten elektrischen Maschine verbunden;
- der erste Anschluss (a) der Hauptwicklung (201) der zweiten elektrischen Maschine und der zweite Anschluss (b) der Steuerwicklung (202) der zweiten elektrischen Maschine sind zur Aufnahme oder Abgabe von elektrischer Energie jeweils in Reihe mit der Stromquelle (1000) verbunden;
die Wicklungen der ersten und der zweiten elektrischen Maschine (100 bzw. 200) liegen in Reihe mit der Stromquelle (1000) und werden von ihr gespeist, wobei der Arbeitseffekt der ersten und der zweiten elektrischen Maschine (100 bzw. 200), die in Reihe verschaltet sind, um die Last individuell anzusteuern, von den Änderungen des Belastungszustands der individuellen elektrischen Maschine geführt wird, um als Betrieb mit variabler Impedanz zu erscheinen und das Endspannungsverhältnis zwischen den in Reihe geschalteten einzelnen Maschinen zu ändern, so dass jede einzelne elektrische Maschine die Wechselwirkung des elektromagnetischen Soll-Effekts erzeugen kann.

2. Asynchron-WS-Induktionsmaschinen in über Kreuz verriegelter Reihenschaltung nach Anspruch 1, bei denen die elektrischen Daten und Eigenschaften der Hauptwicklungen in den jeweiligen Asynchron-WS-Maschinen gleich oder unterschiedlich sein können.

3. Asynchron-WS-Induktionsmaschinen in über Kreuz verriegelter Reihenschaltung nach Anspruch 1, bei denen die elektrischen Daten und Eigenschaften der Steuerwicklungen in den jeweiligen Asynchron-WS-Induktionsmaschinen gleich oder unterschiedlich sein können.

4. Asynchron-WS-Induktionsmaschinen in über Kreuz verriegelter Reihenschaltung nach Anspruch 1, bei denen die elektrischen Nenn-Daten und -Arbeitseigenschaften der jeweiligen Asynchron-WS-Induktionsmaschinen gleich oder verschieden sein können.

5. Asynchron-WS-Induktionsmaschinen in über Kreuz verriegelter Reihenschaltung, die den gleichen oder einen unterschiedlichen Aufbau und unterschiedliche Arbeitseigenschaften aufweisen können.

6. Asynchron-WS-Induktionsmaschinen in über Kreuz verriegelter Reihenschaltung nach Anspruch 1, bei denen die Speisung durch eine ein- oder mehrphasige WS-Quelle oder einen solchen Wechselrichter erfolgt, wobei die Stromquelle in der Spannung oder Frequenz oder beidem festliegen oder zur Drehzahl-, Drehmoment- oder Drehrichtungseinstellung oder zur generatorischen Bremsung moduliert oder als koppelnde Übertragungseinrichtung unter asynchronem elektromagnetischem Effekt für den Übertragungsbetrieb arbeiten kann.

7. Asynchron-WS-Induktionsmaschinen in über Kreuz verriegelter Reihenschaltung nach Anspruch 1, bei denen zwei elektrische Maschinen und über Kreuz in Reihe zu Folgendem verschaltet sind:
die Hauptwicklung (101) der ersten elektrischen Maschine (100) ist deren Haupt-Arbeitswicklung, während der Anschluss (a) der Steuerwicklung (102) der ersten elektrischen Maschine mit dem Anschluss (b) der Hauptwicklung (201) der zweiten elektrischen Maschine (200) in Reihe liegt, die Steuerwicklung (102) und die Hauptwicklung (101) der ersten elektrischen Maschine auf der gleichen Polachse oder mit einem elektrischen Winkel zwischen den Polachsen in der ersten elektrischen Maschine (100) gewickelt sind, wobei die beiden elektrischen Maschinen (100, 200) optional in über Kreuz verriegelter Reihenschaltung nach den Arbeitsbedingungen der Polungsbeziehung zwischen beiden betrieben werden, um 1) mit gleicher Polung zusatzerregt oder 2) mit umgekehrter Polung differenzerregt zu erscheinen;
die Hauptwicklung (201) der zweiten elektrischen Maschine (200) ist deren Haupt-Arbeitswicklung, während der Anschluss (a) der Steuerwicklung (202) der zweiten elektrischen Maschine mit dem Anschluss (b) der Hauptwicklung (101) der ersten elektrischen Maschine (100) in Reihe liegt, die Steuer- und die Hauptwicklung (202 bzw. 101) der zweiten elektrischen Maschine auf die gleiche Polachse oder mit einem elektrischen Winkel zwischen Polachsen in der zweiten elektrischen Maschine (200) gewickelt sind, und die beiden elektrischen Maschinen optional und in Reihe betrieben werden entsprechend den Arbeitsbedingungen der Polungsbeziehung zwischen beiden, um 1) mit gleicher Polung zusatzerregt oder 2) mit umgekehrten Polungen differenzerregt zu erscheinen;
der Anschluss (a) der Hauptwicklung (201) und der Anschluss (b) der Steuerwicklung (202) der zweiten elektrischen Maschine (200) sind an die Stromquelle (1000) und der Anschluss (a) der Hauptwicklung (101) ist an den Anschluss (b) der Steuerwicklung (102) der ersten elektrischen Maschine (100) gelegt, wobei die beiden elektrischen Maschinen (100, 200) vor dem Anschließen an die Stromquelle zunächst in Reihe gelegt werden und die beiden und in Reihe geschalteten elektrischen Maschinen (100, 200) während des Betriebs individuell angetriebener Lasten als variable Impedanzen erscheinen, die Änderungen der einzelnen lastbestimmten Zustände der jeweiligen elektrischen Maschinen folgen und sich das Endspannungsverhältnis zwischen den einzelnen und in Reihe geschalteten elektrischen Maschinen so ändert, dass die in Reihe geschalteten elektrischen Maschinen durch den elektrischen Maschineneffekt jeweils die erforderlichen interaktiven Reaktionen herbeiführen;
variiert bei Stromabgabe in Folge von Laständerungen der ersten elektrischen Maschine (100) der Strom, variiert gleichzeitig der Erregerstrom der Steuerwicklung (202) der zweiten elektrischen Maschine (200), die in Reihe mit der Hauptwicklung (101) der ersten elektrischen Maschine liegt, so dass der synthetische Magnetfluss zwischen der Haupt- und der Steuerwicklung (201, 202) der zweiten elektrischen Maschine sich entsprechend der Polungsbeziehung, der Lagebeziehung der elektrischen Winkel der Polachsen und der Phasenbeziehung des Erregerstroms zwischen beiden ändert und gleichzeitig das Drehmoment und die Drehzahl der zweiten elektrischen Maschine (200) Änderungen der eigenen Endspannung und Belastung sowie Änderungen des Arbeitsstroms der Hauptwicklung (101) der ersten elektrischen Maschine (100) folgend, die in Reihe mit der Steuerwicklung (202) der zweiten elektrischen Maschine liegt, nachgestellt werden können; variiert demgegenüber der Strom in Folge von Laständerungen der zweiten elektrischen Maschine (200), variiert gleichzeitig der Erregerstrom der Steuerwicklung (102) der ersten elektrischen Maschine 100), die in Reihe mit der Hauptwicklung (201) der zweiten elektrischen Maschine liegt, so dass der verknüpfte Magnetfluss zwischen der Haupt- und der Steuerwicklung (101, 102) der ersten elektrischen Maschine entsprechend der Polungsbeziehung, der Lagebeziehung der elektrischen Winkels der Polachsen und der Phasenbeziehung des Erregerstroms zwischen beiden erlaubt, gleichzeitig das Drehmoment und die Drehzahl der ersten elektrischen Maschine (100) Änderungen der eigenen Endspannung und Belastung und Änderungen des Arbeitsstroms in der Hauptwicklung (201) der zweiten elektrischen Maschine (200) folgend nachzustellen, die in Reihe mit der Steuerwicklung (102) der ersten elektrischen Maschine liegt.

8. Asynchron-WS-Induktionsmaschinen in über Kreuz verriegelter Reihenschaltung nach Anspruch 1 mit Drehstrom-Asynchronmaschinen in Stern-Reihenschaltung und Speisung aus einer Drehstromquelle, bei denen:
- die Steuer- und die Hauptwicklung (3102, 3101) der ersten elektrischen Drehstrommaschine auf der gleichen Polachse oder unter einem Winkel zwischen Polachsen in der ersten elektrischen Drehstrommaschine (3100) gewickelt sind, wobei die beiden elektrischen Maschinen (3100, 3200) optional in über Kreuz verriegelter Reihenschaltung entsprechend den betrieblichen Anforderungen der Polungsbeziehung zwischen den beiden betrieben werden, um 1) mit gleicher Polung zusatzerregt oder 2) mit umgekehrter Polung differenzerregt zu erscheinen;
- die Steuer- und die Hauptwicklung (3202, 3201) der zweiten Drehstrommaschine auf der gleichen Polachse oder unter einem Winkel zwischen Polachsen der zweiten Drehstrommaschine (3200) gewickelt sind, wobei die beiden elektrischen Maschinen (3100, 3200) optional in über Kreuz verriegelter Reihenschaltung entsprechend den betrieblichen Anforderungen der Polungsbeziehung zwischen den beiden betrieben werden, um 1) mit gleicher Polung zusatzerregt oder 2) mit umgekehrter Polung differenzerregt zu erscheinen;
- die Hauptwicklung (3101) die Haupt-Arbeitswicklung der ersten Drehstrommaschine (3100) ist, wobei die Phasenanschlüsse (a) der Steuerwicklung (3102) der ersten Drehstrommaschine jeweils mit den Phasenanschlüssen (b) der Hauptwicklung (3201) der zweiten Drehstrommaschine (3200) verbunden sind;
- die Hauptwicklung (3201) der zweiten Drehstrommaschine die Haupt-Arbeitswicklung der zweiten Drehstrommaschine (3200) ist, wobei die Phasenanschlüsse (a) der Steuerwicklung (3202) der ersten Drehstrommaschine jeweils mit den Phasenanschlüssen (b) der Hauptwicklung (3101) der zweiten Drehstrommaschine (3100) verbunden ist;
- die Phasenanschlüsse (a) der Hauptwicklung (3101) der ersten Drehstrommaschine sind jeweils mit den Phasenanschlüssen (b) der Steuerwicklung (3102) der ersten Drehstrommaschine verbunden;
- die Phasenanschlüsse (a) der Hauptwicklung (3201) der zweiten Drehstrommaschine sind mit den R,S,T-Anschlüssen der Drehstromquelle verbunden und die Phasenanschlüsse (b) der Steuerwicklung (3202) der zweiten Drehstrommaschine sind sternverschaltet;
die erste und die zweite Drehstrommaschine (3100, 3200) werden aus der Drehstromquelle (1000) gespeist, wobei die erste und die zweite Drehstrommaschine (3100, 3200) im Betrieb individuell angetriebener Lasten durch den Effekt der Überkreuz-Reihenschaltung als variable Impedanz erscheinen entsprechend den Änderungen der Lastzustände der einzelnen elektrischen Maschinen, so dass das Endspannungsverhältnis zwischen den in Reihe geschalteten elektrischen Maschinen sich ändert und die elektrischen Maschinen jeweils die Wechselwirkung des erforderlichen elektromagnetischen Effekts erzeugen.

9. Asynchron-WS-Induktionsmaschinen in über Kreuz verriegelter Reihenschaltung nach Anspruch 1 mit zwei Asynchron-Drehstrommaschinen in 4-Leiter-Stern-Reihenschaltung mit Speisung aus der 4-Leiter-Drehstromquelle, wobei:
- die Steuerwicklung (3102) und die Hauptwicklung (3101) der ersten Drehstrommaschine auf die gleiche Polachse oder mit einem elektrischen Winkel zwischen Polachsen in der ersten Drehstrommaschine (3100) gewickelt sind, wobei die beiden elektrischen Maschinen (3100, 3200) optional in über Kreuz verriegelter Reihenschaltung nach den Arbeitsbedingungen der Polungsbeziehung zwischen beiden betrieben werden, um 1) mit gleicher Polung zusatzerregt oder 2) mit umgekehrter Polung differenzerregt zu erscheinen;
- die Steuer- und die Hauptwicklung (3202, 3201) der zweiten elektrischen Maschine auf die gleiche Polachse oder mit einem elektrischen Winkel zwischen Polachsen in der zweiten Drehstrommaschine (3200) gewickelt sind, wobei die beiden elektrischen Maschinen (3100, 3200) optional in über Kreuz verriegelter Reihenschaltung nach den Arbeitsbedingungen der Polungsbeziehung zwischen beiden betrieben werden, um 1) mit gleicher Polung zusatzerregt oder 2) mit umgekehrter Polung differenzerregt zu erscheinen;
- die Hauptwicklung (3101) ist die Haupt-Arbeitswicklung der ersten Drehstrommaschine (3100), wobei die Phasenanschlüsse (a) der Steuerwicklung (3102) der ersten Drehstrommaschine jeweils mit den Phasenanschlüssen (b) der Hauptwicklung (3201) der zweiten Drehstrommaschine (3200) verbunden sind;
- die Hauptwicklung (3201) ist die Haupt-Arbeitswicklung der zweiten Drehstrommaschine (3200), wobei die Phasenanschlüsse (a) der Steuerwicklung (3202) der zweiten Drehstrommaschine jeweils mit den Phasenanschüssen (b) der Hauptwicklung (3101) der ersten Drehstrommaschine (3200) verbunden sind;
- die Phasenanschlüsse (a) der Hauptwicklung (3201) der ersten Drehstrommaschine mit den Phasenanschlüssen (b) der Hauptwicklung (3101) der ersten Drehstrommaschine (3100) verbunden sind;
- die Phasenanschlüsse (a) der Hauptwicklung (3101) der ersten Drehstrommaschine mit den Phasenanschlüssen (b) der Steuerwicklung (3102) der ersten Drehstrommaschine verbunden sind;
- die Phasenanschlüsse (a) der Hauptwicklung (3201) der zweiten Drehstrommaschine mit den R,S,T-Anschlüssen der 4-Leiter-Drehstromquelle und die Phasenanschlüsse (b) der sternverschalteten Steuerwicklung (3202) der zweiten Drehstrommaschine mit dem N-Anschluss der Drehstromquelle verbunden sind;
die erste und die zweite Drehstrommaschine (3100, 3200) von der 4-Leiter-Drehstomquelle (1000) gespeist werden, wobei die erste und die zweite Drehstrommaschine (3100, 3200) im Betrieb individuell angetriebener Lasten durch den Effekt der Reihenschaltung als variable Impedanz erscheinen entsprechend den Änderungen der Lastzustände der einzelnen elektrischen Maschinen, so dass das Endspannungsverhältnis zwischen den in Reihe geschalteten elektrischen Maschinen sich ändert und die elektrischen Maschinen jeweils die Wechselwirkung des erforderlichen elektromagnetischen Effekts erzeugen.

10. Asynchron-WS-Induktionsmaschinen in über Kreuz verriegelter Reihenschaltung nach Anspruch 1 mit zwei Asynchron-Drehstrommaschinen in Dreieck-Reihenschaltung mit Speisung aus der Drehstromquelle, wobei:
- die Steuer- und die Hauptwicklung (3102, 3101) der ersten elektrischen Maschine auf die gleiche Polachse oder mit einem elektrischen Winkel zwischen Polachsen in der zweiten Drehstrommaschine (3100) gewickelt sind, wobei die beiden elektrischen Maschinen (3100, 3200) optional in über Kreuz verriegelter Reihenschaltung nach den Arbeitsbedingungen der Polungsbeziehung zwischen beiden betrieben werden, um 1) mit gleicher Polung zusatzerregt oder 2) mit umgekehrter Polung differenzerregt zu erscheinen;
- die Steuer- und die Hauptwicklung (3202, 3201) der zweiten elektrischen Maschine auf die gleiche Polachse oder mit einem elektrischen Winkel zwischen Polachsen in der zweiten Drehstrommaschine (3100) gewickelt sind, wobei die beiden elektrischen Maschinen (3100, 3200) optional in über Kreuz verriegelter Reihenschaltung nach den Arbeitsbedingungen der Polungsbeziehung zwischen beiden betrieben werden, um 1) mit gleicher Polung zusatzerregt oder 2) mit umgekehrter Polung differenzerregt zu erscheinen;
- die Hauptwicklung (3101) ist die Hauptarbeitswicklung der ersten Drehstrommaschine (3100), wobei die Phasenanschlüsse (a) der Steuerwicklung (3102) der ersten elektrischen Maschine jeweils mit den Phasenanschlüssen (b) der Hauptwicklung (3201) der zweiten Drehstrommaschine verbunden sind;
- die Hauptwicklung (3201) ist die Hauptarbeitswicklung der zweiten Drehstrommaschine (3200), wobei die Phasenanschlüsse (a) der Steuerwicklung (3202) der ersten elektrischen Maschine jeweils mit den Phasenanschlüssen (b) der Hauptwicklung (3101) der ersten Drehstrommaschine verbunden sind;
- die Phasenanschlüsse (a) der Hauptwicklung (3101) sind jeweils mit den Phasenanschlüssen (b) der Steuerwicklung (3102) der ersten Drehstrommaschine verbunden;
- die Phasenanschlüsse (a) der Hauptwicklung (3201) und die Phasenanschlüsse (b) der Steuerwicklung (3202) der zweiten Drehstrommaschine sind dreieckverschaltet und weiterhin mit den R,S,T-Anschlüssen der Drehstromquelle (1000) verbunden;
die erste und die zweite Drehstrommaschine (3100, 3200) sind von der Drehstromquelle (1000) gespeist, wobei die erste und die zweite Drehstrommaschine (3100, 3200) im Betrieb individuell angetriebener Lasten durch den Effekt der Überkreuz-Reihenschaltung als variable Impedanz erscheinen entsprechend den Änderungen der Lastzustände der einzelnen elektrischen Maschinen, so dass das Endspannungsverhältnis zwischen den in Reihe geschalteten elektrischen Maschinen sich ändert und die elektrischen Maschinen jeweils die Wechselwirkung des erforderlichen elektromagnetischen Effekts erzeugen.

11. Asynchron-WS-Induktionsmaschinen in über Kreuz verriegelter Reihenschaltung nach Anspruch 1, bei denen drei Drehstrommaschinen in Reihe geschaltet sind, wobei:
das Magnetfeld der ersten elektrischen Maschine (100) mit der Hauptwicklung (101) und der Steuerwicklung (102) der ersten elektrischen Maschine auf der gleichen Polachse oder mit einem elektrischen Winkel zwischen Polachsen installiert ist, wobei der Anschluss (a) der Steuerwicklung (102) der ersten elektrischen Maschine mit dem Anschluss (b) der Hauptwicklung (301) der dritten elektrischen Maschine (300) in Reihe geschaltet ist; das Magnetfeld der zweiten elektrischen Maschine (200) mit der Hauptwicklung (201) und der Steuerwicklung (202) der zweiten elektrischen Maschine (200) auf der gleichen Polachse oder mit einem elektrischen Winkel zwischen Polachsen installiert ist, wobei der Anschluss (a) der Steuerwicklung (202) mit dem Anschluss (b) der Hauptwicklung (101) der ersten elektrischen Maschine (100) verbunden ist; das Magnetfeld der dritten elektrischen Maschine (300) mit der Hauptwicklung (301) und der Steuerwicklung (302) der dritten elektrischen Maschine auf der gleichen Polachse oder mit einem elektrischen Winkel zwischen Polachsen installiert ist, wobei der Anschluss (a) der Steuerwicklung (302) der dritten elektrischen Maschine mit dem Anschluss (b) der Hauptwicklung (201) in der zweiten elektrischen Maschine in Reihe geschaltet ist;
der Anschluss (a) der Hauptwicklung (301) und der Anschluss (b) der Steuerwicklung (302) der dritten elektrischen Maschine mit der Stromquelle (1000) verbunden sind; der Anschluss (a) der Hauptwicklung (101) der ersten elektrischen Maschine (100) mit dem Anschluss (b) der Steuerwicklung (102) der ersten elektrischen Maschine verbunden ist, wobei der gemeinsame Zustand der jeweiligen Reihenverbindung der Haupt- und Steuerwicklungen der vorerwähnten elektrischen Maschinen, die zum Antreiben von Lasten einzeln von der Stromquelle (1000) gespeist werden, Änderungen der einzelnen lastgetriebenen Zustände der einzelnen elektrischen Maschinen bewirkt, um als Betrieb mit variabler Impedanz zu erscheinen und die Endspannungsverhältnisse zwischen den einzelnen, über Kreuz verriegelt in Reihe ge-schalteten elektrischen Maschinen weiter zu verändern und so den einzelnen elektrischen Maschinen zu erlauben, über den Elektromaschineneffekt die geforderten interaktiven Effekte zu erzeugen;
wird bei erfindungsgemäß in Reihe verbundenen Asynchron-WS-Induktionsmaschinen die Anzahl der jeweils eingesetzten elektrischen Maschinen vergrößert, lassen die vorgenannten Prinzipien und Theorien sich entsprechend ableiten.

12. Asynchron-WS-Induktionsmaschinen in über Kreuz verriegelter Reihenschaltung nach Anspruch 1, bei denen die definierte Asynchron-WS-Induktionsmaschine durch ein rotierendes Magnetfeld bestimmt wird und der asynchron aktivierte Körper von der elektromagnetisch induzierten Wechselwirkung.

13. Asynchron-WS-Induktionsmaschinen in über Kreuz verriegelter Reihenschaltung nach Anspruch 1 im Betrieb mit den Funktionen 1) eines Asynchron-Induktionsmotors des Käfigläufertyps, 2) eines Asynchron-Wirbelstrom-Induktionsmotors, 3) eines Asynchron-Käfigläufer-Generators oder 4) eines Asynchron-Wirbelstrom-Generators, 5) teils eines Generators und teils eines Motors oder 6) elektrischen Käfigläufer-Induktionsbremsmaschine oder 7) einer elektrischen Wirbelstrom-Induktionsbremsmaschine oder 8) elektromagnetisch gekoppelten Asynchron-Käfigläufer-Übertragungsvorrichtung oder 9) einer elektromagnetisch gekoppelte Asynchron-Wirbelstrom-Übertragungsvorrichtung.

14. Asynchron-WS-Induktionsmaschinen in über Kreuz verriegelter Reihenschaltung nach Anspruch 1, wobei die Erregungsbeziehungen zwischen der Haupt- und der Steuerwicklung in der elektrischen Maschine selbst die folgenden einschließen:
1) Die Haupt- und die Steuerwicklungen in allen elektrischen Maschinen selbst sind mit gleicher Polung installiert; oder
2) die Haupt- und die Steuerwicklungen in allen elektrischen Maschinen selbst sind mit umgekehrter Polung installiert; oder
3) die Haupt- und die Steuerwicklungen in einigen Maschinen selbst sind mit der gleichen Polung und in den anderen selbst mit umgekehrter Polung installiert.

15. Asynchron-WS-Induktionsmaschinen in über Kreuz verriegelter Reihenschaltung nach Anspruch 1, wobei die Haupt- und die Steuerwicklung in der einzelnen elektrischen Maschine mit gleicher Polung oder unterschiedlichen elektrischen Winkeln installiert sind, wobei das Installieren mit elektrischem Winkel durch Stromführung in der Steuerwicklung über das Magnetfeld selbst und die Verteilung seiner Gestalt erfolgt.

16. Asynchron-WS-Induktionsmaschinen in über Kreuz verriegelter Reihenschaltung nach Anspruch 1, wobei die einzelnen elektrischen Maschinen in Reihe geschaltet sind und von der WS-Stromquelle - einschl. einer ein- oder mehrphasigen WS-Stromquelle oder eines solchen Wechselrichters - direkt gespeist werden und die Stromquelle in der Spannung oder Frequenz oder beidem festliegen oder zur Drehzahl-, Drehmoment- oder Drehrichtungseinstellung oder zur generatorischen Bremsung moduliert oder als koppelnde Übertragungseinrichtung unter asynchronem elektromagnetischem Effekt für den Transmissionsbetrieb arbeiten kann.

## Revendications

1. Au moins deux machines électriques asynchrones (100, 200) à induction et à courant alternatif montées en série avec interblocage croisé, ci-après désignées sous le nom de machines électriques, et montées en série avec une source d'énergie (1000), étant respectivement équipées d'un enroulement principal et d'un enroulement de commande du fonctionnement des machines électriques, les machines électriques comportant ce qui suit :
• l'enroulement de commande (102) de la première machine électrique et l'enroulement principal (101) de la première machine électrique sont bobinés autour du même axe polaire ou bobinés selon un angle électrique entre les axes polaires dans la première machine électrique (100), où les deux machines électriques fonctionnent optionnellement en montage série avec interblocage croisé selon les nécessités de fonctionnement de la relation de polarité qui apparaît entre le fonctionnement à excitation supplémentaire de polarités identiques, ou le fonctionnement à excitation différentiel de polarités opposées ;
• l'enroulement de commande (202) de la seconde machine électrique et l'enroulement principal (201) de la seconde machine électrique sont bobinés autour du même axe polaire ou bobinés selon un angle électrique entre les axes polaires dans la seconde machine électrique (200), où les deux machines électriques fonctionnent optionnellement en montage série avec interblocage croisé selon les nécessités de fonctionnement de la relation de polarité qui apparaît entre le fonctionnement à excitation supplémentaire de polarités identiques, ou le fonctionnement à excitation différentiel de polarités opposées ;
• l'enroulement principal (101) de la première machine électrique est l'enroulement de fonctionnement principal de la première machine électrique (100), alors que la première borne (a) du premier enroulement de commande (102) de machine électrique est connectée à la seconde borne (b) de l'enroulement principal (201) de la seconde machine électrique monté dans la seconde machine électrique (200) ;
• l'enroulement principal (201) de la seconde machine électrique est l'enroulement de fonctionnement principal de la seconde machine électrique (200), où la première borne (a) du second enroulement de commande (202) de machine électrique est connectée à la seconde borne (b) de l'enroulement principal (101) de la première machine électrique monté dans la première machine électrique (100) ;
• la première borne (a) de l'enroulement principal (101) de la première machine électrique est connectée en série à la seconde borne (b) du premier enroulement de commande (102) de machine électrique ;
• la première borne (a) de l'enroulement principal (201) de la seconde machine électrique et la seconde borne (b) du second enroulement de commande (202) de machine électrique sont respectivement connectées en série à la source d'énergie (1000) pour l'énergie électrique d'entrée ou de sortie ;
• les enroulements de ladite première machine électrique (100) et de ladite seconde machine électrique (200) sont connectés en série et sont entraînés par la source d'énergie (1000), où le fonctionnement de la première machine électrique (100) et de la seconde machine électrique (200) montées en série avec interblocage croisé pour entraîner la charge individuellement est régi par les changements des états de charge d'entraînement de la machine électrique individuelle pour faire apparaître un fonctionnement à impédance variable afin de changer le rapport de tension de sortie entre des machines électriques individuelles montées en série avec interblocage croisé permettant de ce fait à chaque machine électrique individuelle de produire une interaction de l'effet électromagnétique requis.

2. Machines électriques asynchrones à induction et à courant alternatif montées en série avec interblocage croisé selon la revendication 1, où les caractéristiques électriques et les caractéristiques des enroulements principaux dans les machines électriques asynchrones à induction et à courant alternatif individuelles respectives peuvent être les mêmes ou différentes.

3. Machines électriques asynchrones à induction et à courant alternatif montées en série avec interblocage croisé selon la revendication 1, où les caractéristiques électriques et les caractéristiques des enroulements de commande dans les machines électriques asynchrones à induction et à courant alternatif individuelles respectives peuvent être les mêmes ou différentes.

4. Machines électriques asynchrones à induction et à courant alternatif montées en série avec interblocage croisé selon la revendication 1, où les caractéristiques nominales et les caractéristiques de fonctionnement des machines électriques asynchrones à induction et à courant alternatif individuelles respectives peuvent être les mêmes ou différentes.

5. Machines électriques asynchrones à induction et à courant alternatif montées en série avec interblocage croisé selon la revendication 1, où les machines électriques individuelles peuvent être constituées par des machines électriques asynchrones à induction et à courant alternatif présentant des types de structures identiques ou différents et différentes caractéristiques de fonctionnement.

6. Machines électriques asynchrones à induction et à courant alternatif montées en série avec interblocage croisé selon la revendication 1, où elles sont entraînées par une source d'énergie électrique à courant alternatif comprenant des sources d'énergie monophasées ou polyphasées à courant alternatif, ou des sources d'énergie à courant continu/courant alternatif, où la source d'énergie peut être constante ou modulée en tension, fréquence, ou fréquence et tension simultanément pour la vitesse de rotation, le couple de rotation, le sens de rotation, ou pour les opérations de freinage de régénération de puissance, ou utilisées comme dispositif de transmission de couplage sous l'effet électromagnétique asynchrone pour l'opération de transmission.

7. Machines électriques asynchrones à induction et à courant alternatif montées en série avec interblocage croisé selon la revendication 1, lesquelles comprennent deux machines électriques montées en série avec interblocage croisé pour constituer ce qui suit :
• l'enroulement principal (101) de la première machine électrique est l'enroulement de fonctionnement principal de la première machine électrique (100), alors que la borne (a) de l'enroulement de commande (102) de la première machine électrique est connectée en série à la borne (b) de l'enroulement de commande (202) de la seconde machine électrique (200), l'enroulement de commande (102) de la première machine électrique et l'enroulement principal (101) de la première machine électrique sont bobinés autour du même axe polaire ou bobinés selon un angle électrique entre les axes polaires dans la première machine électrique (100), où les deux machines électriques (100, 200) fonctionnent optionnellement en montage série avec interblocage croisé selon les nécessités de fonctionnement de la relation de polarité qui apparaît entre le fonctionnement à excitation supplémentaire de polarités identiques, ou le fonctionnement à excitation différentiel de polarités opposées ;
• l'enroulement principal (201) de la seconde machine électrique dans la seconde machine électrique (200) est l'enroulement de fonctionnement principal de la seconde machine électrique (200), alors que la borne (a) de l'enroulement de commande (202) de la seconde machine électrique est connectée en série à la borne (b) de l'enroulement principal (101) de la première machine électrique (100), l'enroulement de commande (202) de la seconde machine électrique et l'enroulement principal (201) de la seconde machine électrique sont bobinés autour du même axe polaire ou bobinés selon un angle électrique entre les axes polaires dans la seconde machine électrique (200) où les deux machines électriques fonctionnent optionnellement en montage série avec interblocage croisé selon les nécessités de fonctionnement de la relation de polarité qui apparaît entre le fonctionnement à excitation supplémentaire de polarités identiques, ou le fonctionnement à excitation différentiel de polarités opposées ;
• la borne (a) de l'enroulement principal (201) de la seconde machine électrique et la borne (b) du second enroulement de commande (202) de machine électrique de la seconde machine électrique (200) sont connectés à la source d'énergie (1000) ; la borne (a) de l'enroulement principal (101) de la première machine électrique (100) est connectée à la borne (b) du premier enroulement de commande (102) de machine électrique, où les deux machines électriques (100, 200) sont d'abord montées en série avant d'être connectées à la source d'énergie, et les deux machines électriques (100, 200) montées en série avec interblocage croisé au cours du fonctionnement de charges entraînées individuellement présentant un fonctionnement à impédance variable suite à des fluctuations des états d'entraînement de charge individuels des machines électriques individuelles afin de changer le rapport de tension de sortie entre des machines électriques individuelles montées en série avec interblocage croisé pour laisser chaque machine électrique individuelle montée en série avec interblocage mutuel relatif générer les réactions interactives requises par l'effet de la machine électrique ;
• en fonctionnement en décharge d'électricité, si le courant est modifié en raison de la variation de charge de la première machine électrique (100), alors le courant d'excitation de l'enroulement de commande (202) de la seconde machine électrique (200) connecté en série à l'enroulement principal (101) de la première machine électrique est modifié de manière simultanée, de sorte que le flux magnétique synthétique entre l'enroulement principal (201) de la seconde machine électrique et l'enroulement de commande (202) de la seconde machine électrique soit modifié en fonction de la relation de polarité, de la relation de position de l'angle électrique d'axe polaire, et de la relation de phase du courant d'excitation entre les deux, permettant ainsi au couple et à la vitesse de rotation de la seconde machine électrique (200) d'être réglés simultanément suite aux modifications de sa propre tension minimale de fonctionnement et de sa charge ainsi qu'aux modifications du courant en fonctionnement au niveau de l'enroulement principal (101) de la première machine électrique (100) connecté en série à l'enroulement de commande (202) de la seconde machine électrique ; au contraire, si le courant est modifié en raison d'une variation de charge de la seconde machine électrique (200), alors le courant d'excitation de l'enroulement de commande (102) de la première machine électrique (100) connecté en série à l'enroulement principal (201) de la seconde machine électrique est modifié de manière simultanée, de sorte que le flux magnétique synthétique entre l'enroulement principal (101) de la première machine électrique et l'enroulement de commande (102) de la première machine électrique soit modifié en fonction de la relation de polarité, de la relation de position de l'angle électrique d'axe polaire, et de la relation de phase du courant d'excitation entre les deux, permettant ainsi au couple et à la vitesse de rotation de la première machine électrique (100) d'être réglés simultanément suite aux modifications de ses propres tension de sortie et charge et des modifications du courant en fonctionnement au niveau de l'enroulement principal (201) de la seconde machine électrique (200) connecté en série au premier enroulement de commande de machine électrique (102).

8. Machines électriques asynchrones à induction et à courant alternatif montées en série avec interblocage croisé selon la revendication 1, lesquelles comprennent adopter deux machines électriques asynchrones à induction et à courant alternatif triphasé connectées en série en étoile à entraîner par une source d'énergie triphasée, dans lesquelles :
• l'enroulement de commande (3102) de la première machine électrique triphasée et l'enroulement principal (3101) de la première machine électrique triphasée sont bobinés autour du même axe polaire ou bobinés selon un angle électrique entre les axes polaires dans la première machine électrique triphasée (3100), où les deux machines électriques (3100, 3200) fonctionnent optionnellement en montage série avec interblocage croisé selon les nécessités de fonctionnement de la relation de polarité qui apparaît entre le fonctionnement à excitation supplémentaire de polarités identiques, ou le fonctionnement à excitation différentiel de polarités opposées ;
• l'enroulement de commande (3202) de la seconde machine électrique triphasée et l'enroulement principal (3201) de la seconde machine électrique triphasée sont bobinés autour du même axe polaire ou bobinés selon un angle électrique entre les axes polaires dans la seconde machine électrique triphasée (3200), où les deux machines électriques (3100, 3200) fonctionnent optionnellement en montage série avec interblocage croisé selon les nécessités de fonctionnement de la relation de polarité qui apparaît entre le fonctionnement à excitation supplémentaire de polarités identiques, ou le fonctionnement à excitation différentiel de polarités opposées ;
• l'enroulement principal (3101) de la première machine électrique triphasée est l'enroulement de fonctionnement principal de la première machine électrique triphasée (3100), où la borne (a) de chaque enroulement de phase de l'enroulement de commande (3202) de la seconde machine électrique triphasée est connectée à la borne (b) de chaque enroulement de phase de l'enroulement principal (3201) de la seconde machine électrique triphasée dans la seconde machine électrique triphasée (3200) ;
• l'enroulement principal (3201) de la seconde machine électrique triphasée est l'enroulement de fonctionnement principal de la seconde machine électrique triphasée (3200), où la borne (a) de chaque enroulement de phase de l'enroulement de commande (3202) de la seconde machine électrique triphasée est connectée à la borne (b) de chaque enroulement de phase de l'enroulement principal (3101) de la première machine électrique triphasée dans la première machine électrique triphasée (3100) ;
• la borne (a) de chaque enroulement de phase de l'enroulement principal (3101) de la première machine électrique triphasée est connectée à la borne (b) de chaque enroulement de phase de l'enroulement de commande (3102) de la première machine électrique triphasée ;
• la borne (a) de chaque enroulement de phase de l'enroulement principal (3201) de la seconde machine électrique triphasée est connectée aux bornes R.S.T. de la source d'énergie triphasée, la borne (b) de chaque enroulement de phase de l'enroulement de commande (3202) de la seconde machine électrique triphasée est connectée en étoile ;
• la borne (a) de chaque enroulement de phase de l'enroulement principal (3101) de la première machine électrique triphasée et la borne (a) de chaque enroulement de phase de l'enroulement principal (3201) de la seconde machine électrique triphasée sont connectés aux bornes R.S.T. de la source d'énergie triphasée ;
• ladite première machine électrique triphasée (3100) et ladite seconde machine électrique triphasée (3200) sont entraînées par la source d'énergie triphasée de courant alternatif (1000), où la première machine électrique triphasée (3100) et la seconde machine électrique triphasée (3200) dans le fonctionnement des charges entraînées individuellement le sont par l'effet du fonctionnement du montage en série avec interblocage croisé pour faire apparaître un fonctionnement à impédance variable en fonction des changements des états de charge d'entraînement de la machine électrique individuelle afin de changer le rapport de tension de sortie entre des machines électriques individuelles montées en série avec interblocage croisé, permettant de ce fait à chaque machine électrique individuelle de produire une interaction de l'effet électromagnétique requis.

9. Machines électriques asynchrones à induction et à courant alternatif montées en série avec interblocage croisé selon la revendication 1, lesquelles comprennent deux machines électriques asynchrones à induction et à courant alternatif triphasé connectées en étoile à quatre fils triphasés à entraîner par la source d'énergie à quatre fils triphasés, dans lesquelles :
• l'enroulement de commande (3102) de la première machine électrique triphasée et l'enroulement principal (3101) de la première machine électrique triphasée sont bobinés autour du même axe polaire ou bobinés selon un angle électrique entre les axes polaires dans la première machine électrique triphasée (3100), dans lequel les deux machines électriques (3100, 3200) fonctionnent optionnellement en montage série avec interblocage croisé selon les nécessités de fonctionnement de la relation de polarité qui apparaît entre le fonctionnement à excitation supplémentaire de polarités identiques, ou le fonctionnement à excitation différentiel de polarités opposées ;
• l'enroulement de commande (3202) de la seconde machine électrique triphasée et l'enroulement principal (3201) de la seconde machine électrique triphasée sont bobinés autour du même axe polaire ou bobinés selon un angle électrique entre les axes polaires dans la seconde machine électrique triphasée (3200), dans lequel les deux machines électriques (3100, 3200) fonctionnent optionnellement en montage série avec interblocage croisé selon les nécessités de fonctionnement de la relation de polarité qui apparaît entre le fonctionnement à excitation supplémentaire de polarités identiques, ou le fonctionnement à excitation différentiel de polarités opposées ;
• l'enroulement principal (3101) de la première machine électrique triphasée est l'enroulement de fonctionnement principal de la première machine électrique triphasée (3100), dans lequel la borne (a) de chaque enroulement de phase de l'enroulement de commande (3102) de la première machine électrique triphasée est connectée à la borne (b) de chaque enroulement de phase de l'enroulement principal (3201) de la seconde machine électrique triphasée dans la seconde machine électrique triphasée (3200) ;
• l'enroulement principal (3201) de la seconde machine électrique triphasée est l'enroulement de fonctionnement principal de la seconde machine électrique triphasée (3200), dans lequel la borne (a) de chaque enroulement de phase de l'enroulement de commande (3202) de la seconde machine électrique triphasée est connectée à la borne (b) de chaque enroulement de phase de l'enroulement principal (3101) de la première machine électrique triphasée dans la première machine électrique triphasée (3100) ;
• la borne (a) de chaque enroulement de phase de l'enroulement principal (3101) de la première machine électrique triphasée est connectée à la borne (b) de chaque enroulement de phase de l'enroulement de commande (3102) de la première machine électrique triphasée ;
• la borne (a) de chaque enroulement de phase de l'enroulement principal (3201) de la seconde machine électrique triphasée est connectée aux bornes R.S.T. de la source d'énergie à quatre fils triphasés à courant alternatif ; la borne (b) de chaque enroulement de phase de l'enroulement de commande (3202) de la seconde machine électrique triphasée étant dans le raccordement en étoile connectée à la borne neutre N de la source d'énergie triphasée à quatre fils à courant alternatif ;
• ladite première machine électrique triphasée (3100) et ladite seconde machine électrique triphasée (3200) sont entraînées par la source d'énergie triphasée à quatre fils à courant alternatif (1000), où la première machine électrique triphasée (3100) et la seconde machine électrique triphasée (3200) dans le fonctionnement des charges entraînées individuellement le sont par l'effet du fonctionnement du montage en série avec interblocage croisé pour faire apparaître un fonctionnement à impédance variable en fonction des changements des états de charge d'entraînement de la machine électrique individuelle afin de changer le rapport de tension de sortie entre des machines électriques individuelles montées en série avec interblocage croisé, permettant de ce fait à chaque machine électrique individuelle de produire une interaction de l'effet électromagnétique requis.

10. Machines électriques asynchrones à induction et à courant alternatif montées en série avec interblocage croisé selon la revendication 1, lesquelles comprennent deux machines électriques asynchrones à induction et à courant alternatif triphasé connectées en série en Δ à entraîner par la source d'énergie triphasée de courant alternatif, dans lesquelles :
• l'enroulement de commande (3102) de la première machine électrique triphasée et l'enroulement principal (3101) de la première machine électrique triphasée sont bobinés autour du même axe polaire ou bobinés selon un angle électrique entre les axes polaires dans la première machine électrique triphasée (3100), dans lequel les deux machines électriques (3100, 3200) fonctionnent optionnellement en montage série avec interblocage croisé selon les nécessités de fonctionnement de la relation de polarité qui apparaît entre le fonctionnement à excitation supplémentaire de polarités identiques, ou le fonctionnement à excitation différentiel de polarités opposées ;
• l'enroulement de commande (3202) de la seconde machine électrique triphasée et l'enroulement principal (3201) de la seconde machine électrique triphasée sont bobinés autour du même axe polaire ou bobinés selon un angle électrique entre les axes polaires dans la seconde machine électrique triphasée (3200), dans lequel les deux machines électriques (3100, 3200) fonctionnent optionnellement en montage série avec interblocage croisé selon les nécessités de fonctionnement de la relation de polarité qui apparaît entre le fonctionnement à excitation supplémentaire de polarités identiques, ou le fonctionnement à excitation différentiel de polarités opposées ;
• l'enroulement principal (3101) de la première machine électrique triphasée est l'enroulement de fonctionnement principal de la première machine électrique triphasée (3100), où la borne (a) de chaque enroulement de phase de l'enroulement de commande (3102) de la première machine électrique triphasée est connectée à la borne (b) de chaque enroulement de phase de l'enroulement principal (3201) de la seconde machine électrique triphasée dans la seconde machine électrique triphasée (3200) ;
• l'enroulement principal (3201) de la seconde machine électrique triphasée est l'enroulement de fonctionnement principal de la seconde machine électrique triphasée (3200), où la borne (a) de chaque enroulement de phase de l'enroulement de commande (3202) de la seconde machine électrique triphasée est connectée à la borne (b) de chaque enroulement de phase de l'enroulement principal (3101) de la première machine électrique triphasée dans la première machine électrique triphasée (3100) ;
• la borne (a) de chaque enroulement de phase de l'enroulement principal (3101) de la première machine électrique triphasée est connectée à la borne (b) de chaque enroulement de phase de l'enroulement de commande (3102) de la première machine électrique triphasée ;
• la borne (a) de chaque enroulement de phase de l'enroulement principal (3201) de la seconde machine électrique triphasée et la borne (b) de chaque enroulement de phase de l'enroulement de commande (3202) de la seconde machine électrique triphasée sont connectés en Δ et connectés en outre aux bornes R.S.T. de la source d'énergie triphasée de courant alternatif (1000) ;
• ladite première machine électrique triphasée (3100) et ladite seconde machine électrique triphasée (3200) sont entraînées par la source d'énergie triphasée à courant alternatif (1000), où la première machine électrique triphasée (3100) et la seconde machine électrique triphasée (3200) dans le fonctionnement des charges entraînées individuellement le sont par l'effet du fonctionnement du montage en série avec interblocage croisé pour faire apparaître un fonctionnement à impédance variable en fonction des changements des états de charge d'entraînement de la machine électrique individuelle afin de changer le rapport de tension de sortie entre des machines électriques individuelles montées en série avec interblocage croisé, permettant de ce fait à chaque machine électrique individuelle de produire une interaction de l'effet électromagnétique requis.

11. Machines électriques asynchrones à induction et à courant alternatif montées en série avec interblocage croisé selon la revendication 1, lesquelles comprennent trois machines électriques asynchrones à induction et à courant alternatif en connexion série, dans lesquelles :
• le champ magnétique de la première machine électrique (100) est obtenu par l'enroulement principal (101) de la première machine électrique et par l'enroulement de commande (102) de la première machine électrique autour du même axe polaire ou selon un angle électrique entre les axes polaires, où la borne (a) de l'enroulement de commande (102) de la première machine électrique est connectée en série à la borne (b) de l'enroulement principal (301) de la troisième machine électrique à enroulement dans la troisième machine électrique (300) ; le champ magnétique de la seconde machine électrique (200) est obtenu par l'enroulement principal (201) de la seconde machine électrique et par l'enroulement de commande (202) de la seconde machine électrique autour du même axe polaire ou selon un angle électrique entre les axes polaires, où la borne (a) de l'enroulement de commande (202) de la seconde machine électrique est connectée en série à la borne (b) de l'enroulement principal (101) de la première machine électrique à enroulement dans la première machine électrique (100) ; le champ magnétique de la troisième machine électrique (300) est obtenu par l'enroulement principal (301) de la troisième machine électrique et par l'enroulement de commande (302) de la troisième machine électrique autour du même axe polaire ou selon un angle électrique entre les axes polaires, où la borne (a) de l'enroulement de commande (302) de la troisième machine électrique est connectée en série à la borne (b) de l'enroulement de commande (202) de la seconde machine électrique à enroulement dans la seconde machine électrique (200) ;
• la borne (a) de l'enroulement principal (301) de la troisième machine électrique (300) et la borne (b) du troisième enroulement de commande (302) de machine électrique sont connectées à la source d'énergie (1000) ; la borne (a) de l'enroulement principal (101) de la première machine électrique (100) est connectée à la borne (b) de l'enroulement de commande (102) de la première machine électrique, c'est par la combinaison des connexions en série particulières entre les enroulements principaux et les enroulements de commande des trois machines électriques susmentionnées alimentées individuellement par la source d'énergie (1000) pour entraîner des charges et en fonction des variations des différents états d'entraînement provenant de la charge des machines électriques individuelles pour faire apparaître un fonctionnement à impédance variable, et les rapports de tension de sortie entre des machines électriques individuelles montées en série avec interblocage croisé sont en outre par conséquent changés pour permettre aux machines électriques individuelles de générer les réactions interactives requises par l'effet de la machine électrique ;
• pour les machines électriques asynchrones à induction et à courant alternatif montées en série avec interblocage croisé de la présente invention, si le nombre de machines électriques constituantes est augmenté, les principes et théories susmentionnés peuvent être déduits de manière similaire.

12. Machines électriques asynchrones à induction et à courant alternatif montées en série avec interblocage croisé selon la revendication 1, dans lesquelles la machine électrique asynchrone à courant alternatif définie est constituée par un champ magnétique rotatif et dans lesquelles le corps interactif actionné de manière asynchrone est induit par effet électromagnétique.

13. Machines électriques asynchrones à induction et à courant alternatif montées en série avec interblocage croisé selon la revendication 1, lesquelles sont prévues pour être appliquées :
1) aux fonctionnements en moteur asynchrone de type à cage d'écureuil à induction et à courant alternatif ; ou
2) aux fonctionnements en moteur asynchrone à induction à courant de Foucault ; ou
3) aux fonctionnements en générateur asynchrone de type à cage d'écureuil à induction et à courant alternatif ; ou
4) aux fonctionnements en générateur asynchrone à induction à courant de Foucault ; ou
5) au fonctionnement en générateur partiel et au fonctionnement en moteur partiel ; ou
6) comme dispositif de freinage de machine électrique de type à cage d'écureuil à induction ; ou
7) comme dispositif de freinage de machine électrique de type comme dispositif de freinage de machine électrique de type à induction à courant de Foucault ; ou
8) comme dispositif de transmission de couplage électromagnétique asynchrone de type cage d'écureuil à induction ; ou
9) comme positif de transmission de couplage électromagnétique asynchrone de type à induction de courant de Foucault.

14. Machines électriques asynchrones à induction et à courant alternatif montées en série avec interblocage croisé selon la revendication 1, dans lesquelles les rapports d'excitation entre l'enroulement principal et l'enroulement de commande dans la machine électrique elle-même comprennent :
1) les enroulements principaux et les enroulements de commande dans toutes les machines électriques elles-mêmes sont montés en polarités identiques ; ou
2) les enroulements principaux et les enroulements de commande dans toutes les machines électriques elles-mêmes sont montés en polarités opposées ; ou
3) les enroulements principaux et les enroulements de commande dans les machines électriques partielles elles-mêmes sont montés en polarités identiques, alors que les enroulements principaux et les enroulements de commande dans les machines électriques partielles elles-mêmes sont montés en polarités opposées.

15. Machines électriques asynchrones à induction et à courant alternatif montées en série avec interblocage croisé selon la revendication 1, dans lesquelles l'enroulement principal et l'enroulement de commande dans la machine électrique individuelle sont montés en polarités identiques ou montés selon un angle électrique différent, où le procédé de montage selon un angle électrique différent est réalisé par la commande du courant passant à travers l'enroulement de commande pour changer la forme de distribution du champ magnétique constitué et celle du champ magnétique principal.

16. Machines électriques asynchrones à induction et à courant alternatif montées en série avec interblocage croisé selon la revendication 1, dans lesquelles les machines électriques individuelles sont mutuellement connectées en série et sont directement entraînées par une source d'énergie électrique à courant alternatif, comprenant une source d'énergie monophasée ou polyphasée à courant alternatif, ou une source d'énergie à courant continu/courant alternatif, dans lesquelles la source d'énergie est constante ou modulée en tension, ou est modulée de manière commune en fréquence ou en tension, ou modulée simultanément en fréquence et en tension pour la vitesse de rotation, le couple de rotation, le sens de rotation, ou pour les freinages en régénération de puissance, ou utilisée comme dispositif de transmission de couple à effet électromagnétique asynchrone pour l'opération de transmission.
